# EUROPEAN PATENT APPLICATION

(11) **EP 2 045 485 A1**
(43) Date of publication of application: **08.04.2009**
(21) Application number: 06780805.5
(22) Date of filing: 05.07.2006
(51) Int. Cl.: F16F 15/136, F16H 7/08

(54) **ROTATION URGING DEVICE**

(71) Applicant: JTEKT Corporation, Osaka-shi Osaka 542-8502 (JP)
(72) Inventor: HARADA, Masahiro C/o JTEKT Corporation, Osaka 542-8502 (JP); UENO, Hiroshi C/o JTEKT Corporation, Osaka 542-8502 (JP)
(74) Representative: Sajda, Wolf E.
(86) International application number: PCT/JP2006/313429
(87) International publication number: WO 2008/004291

(57) **Abstract**

An inner raceway surface (21) and an outer raceway surface (31) include deformed raceway surfaces (2k, 3k) which, in conjunction with the relative rotation of inner and outer rings (2, 3), progressively narrow a clamping gap for a cylindrical roller (4) as allowing the rolling movement of the cylindrical roller (4) thereby imparting a rotational urging force between the inner and outer rings (2, 3) in a direction to eliminate a phase difference caused by the relative rotation.

## Description

### Technical Field

The present invention relates to a rotation urging device exhibiting spring elasticity in a rotational direction thereof.

### Background Arts

A coil spring employing a piano wire or the like and an elastic material such as rubber and resin are used as a rotation urging device exhibiting the spring elasticity in the rotational direction thereof. Such a device is used for a variety of purposes.
As set forth in Japanese Unexamined Patent Application Publication No. H7(1995)-4481, for example, the rotation urging device used in an auto tensioner employs a torsion coil spring as a rotation urging member. The auto tensioner imparts a certain tension to a V-belt or the like by means of which an automotive engine drives auxiliaries. By virtue of the use of the torsion coil spring, the rotation urging device is capable of automatically changing damping force according to the variation of tension of the V-belt or the like.

### Disclosure of the Invention

Unfortunately, the conventional rotation urging devices employing the torsion coil spring or the like have various problems.
Firstly, the conventional rotation urging devices suffer a low design freedom, The torsion spring constant of the rotation urging device, for example, is changed as follows. As for the torsion coil spring, the wire turns or winding diameter is varied. As for the elastic member such as rubber, the material is changed or the thickness thereof is varied. However, such modifications provide only a limited range of freedom in designing the torsion spring constant. Therefore, the conventional rotation urging member, which is not varied in size (constitution), has quite a limited range of available torsion spring constant. Further, the conventional rotation urging member has a linear relation between the torsion angle and the torsion spring constant. The conventional rotation urging member does not provide a non-linear variation of the torsion spring constant relative to the torsion angle. The conventional rotation urging member is not adapted for free variation of the torsion spring constant relative to the torsion angle.
Secondly, the conventional rotation urging member is prone to deterioration due to continuous use or change in properties with time. Hence, the conventional rotation urging member suffers a short service life.
Thirdly, the conventional rotation urging device has a complicated peripheral structure because it requires a connecting portion for connecting the rotation urging member such as the torsion coil spring with an outside member and an inside member which rotate relative to each other. This results in the increased number of components and the increased assembly cost. In addition, the device is decreased in reliability.
Fourthly, the conventional rotation urging device tends to be increased in size (larger constitution) because of the low design freedom and the complicated peripheral structure as described above. There is a limit to the size reduction of the device.

As described above, the rotation urging device employing the torsion coil spring or the like have various problems. In contrast, the invention provides a member having a novel construction designed based on a technical concept totally different from the conventional technical concept. That is, the invention provides a rotation urging device adapted to solve the above-described problems.
The invention seeks to provide an innovative rotation urging device solving the various problems of the conventional members such as the torsion coil spring.

According to the invention, a rotation urging device comprises: an inside member including an inner raceway surface on an outer periphery thereof; an outside member including an outer raceway surface on an inner periphery thereof and disposed in relatively rotatable relation to the inside member; and a rolling element rollably interposed between the inner raceway surface and the outer raceway surface, wherein at least one of the inner raceway surface and the outer raceway surface is at least partially formed with a deformed raceway surface which, in conjunction with the relative rotation of the inside member and the outside member, progressively decreases a clamping gap for the rolling element as allowing the rolling movement of the rolling element thereby imparting a rotational urging force between the inside member and the outside member in a direction to eliminate a phase difference between the inside member and the outside member, the phase difference caused by the relative rotation.

Such a constitution provides a member which utilizes a simple structure without a torsion coil spring for imparting a rotational urging function (hereinafter, also referred to as "torsion spring capability") and which is also capable of bearing a radial load. In addition, the constitution has quite a high degree of design freedom because the design of the deformed raceway surface provides for free design of torsional rigidity and the like.

It is preferred in the above rotation urging device that the deformed raceway surface formed on the inner raceway surface is a convex curve. It is also preferred that the deformed raceway surface formed on the outer raceway surface is a concave curve. Such constitutions make it easy to reduce the rate of change of the clamping gap for the rolling element which is progressively decreased in conjunction with the relative rotation of the inner and outer rings. This makes it easy to provide the torsion spring capability across a wider circumferential range.

It is preferred that the deformed raceway surface defines a curved surface having a curvature center deviated from a rotation axis of the inside and outside members.
Such a deformed raceway surface is easier to design and to machine (manufacture) than a deformed raceway surface defining a free-form surface or the like.

It is preferred that the rotation urging device comprises the inside raceway surface and/or the outside raceway surface constituted by a plurality of deformed raceway surfaces continuously formed and circumferentially arranged with equal spacing, and the same number of rolling elements as the deformed raceway surfaces arranged with equal spacing, and that the clamping gaps for all the rolling elements are uniformly varied in conjunction with the relative rotation of the inside and outside members.
The circumferential ranges of the respective deformed raceway surfaces can be maximized by circumferentially arranging the deformed raceway surfaces with equal spacing and composing the raceway surface of the continuous deformed raceway surfaces. In addition, the circumferential range providing the torsion spring capability can be expanded further. Furthermore, the outer ring can receive equal forces from all the rolling elements in the same direction so that the outer ring is imparted with a uniform torsion spring capability in the circumferential direction thereof. Thus is provided the rotation urging device having a high rotational accuracy.

The rotation urging device may also have a constitution wherein the deformed raceway surface is formed in a manner to permit the inside and outside members to make an endless relative rotation at least in one direction when a torque of above a certain value is applied between the inside and outside members. In this case, the rotation urging device is adapted to prevent an excessive torque from being exerted between the inside and outside members, thus functioning as a torque limiter.

### Brief Description of the Drawings

- FIG. 1: is a sectional view showing a rotation urging device according to a first embodiment of the invention;
- FIG. 2: is a diagram showing a contour of an outer raceway surface of the rotation urging device of FIG. 1;
- FIG. 3: is a diagram showing a contour of an inner raceway surface of the rotation urging device of FIG. 1;
- FIG. 4: is a diagram for explaining the principle of the development of torsion spring capability in the rotation urging device of FIG. 1;
- FIG. 5: is a sectional view showing a rotation urging device according to a second embodiment of the invention;
- FIG. 6: is a group of sectional views illustrating modifications of the invention;
- FIG. 7: is a sectional view showing a rotation urging device according to a third embodiment of the invention;
- FIG. 8: is a diagram for explaining the principle of the development of torsion spring capability in the rotation urging device of FIG. 7;
- FIG. 9: is a diagram illustrating an application of the invention;
- FIG. 10: is a graph showing the results of a test on the influence of roller radius;
- FIG. 11: is a graph showing the results of a test on the influence of effective roller length;
- FIG. 12: is a graph showing the results of a test on the influence of mean raceway diameter;
- FIG. 13: is a graph showing the results of a test on the influence of radial clearance;
- FIG. 14: is a graph showing a relation between the outer-ring rotation angle and the outer-ring torque;
- FIG. 15: is a graph showing a relation between the outer-ring rotation angle and the torsional rigidity;
- FIG. 16: is a graph showing a relation between the outer-ring torque and the torsional rigidity;
- FIG. 17: is a graph showing a relation between the outer-ring rotation angle and the outer-ring torque;
- FIG. 18: is a graph showing a relation between the outer-ring rotation angle and the torsional rigidity; and
- FIG. 19: is a graph showing a relation between the outer-ring torque and the torsional rigidity.

### Best Modes for Carrying Out the Invention

The embodiments of the invention will be described hereinafter with reference to the accompanying drawings.
While the embodiment of the invention is described by way of an example which uses an inner ring as an inside member and an outer ring as an outside member, the inside and outside members of the invention are not limited to ring-like members such as the inner ring and the outer ring. For instance, the inside member may be a hollow member. Further, the inside member or the outside member may be unified with another member.

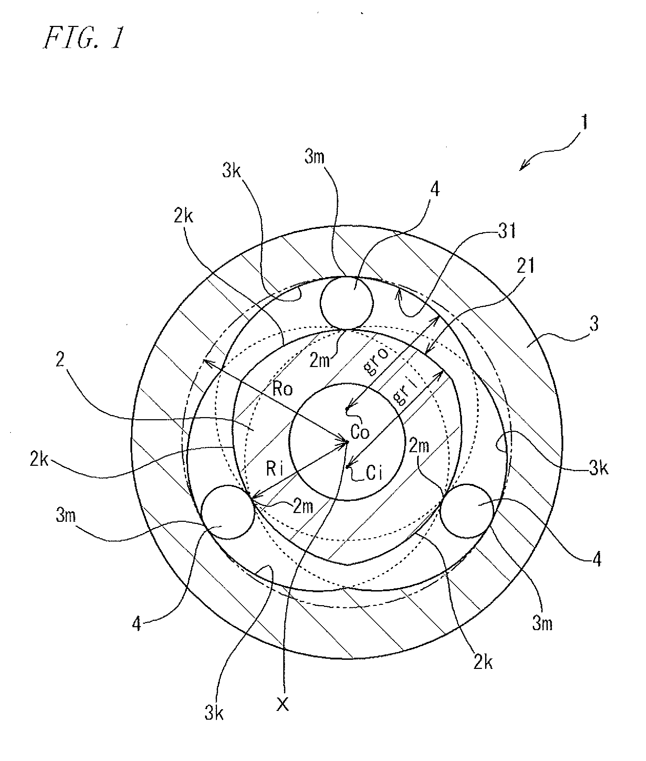

FIG. 1 is a sectional view showing a rotation urging device 1 according to a first embodiment of the invention. The rotation urging device I includes an inner ring 2 as the inside member, an outer ring 3 as the outside member, and cylindrical rollers 4 as a rolling element interposed between the inner and outer rings 2, 3. The cylindrical rollers 4 are rollably interposed between an inner raceway surface 21 as an inner raceway and an outer raceway surface 31 as an outer raceway.
Unlike a conventional cylindrical roller bearing, the raceway surfaces of the rotation urging device 1 are not defined by circumferential surfaces about a rotation axis (shaft center) of the inner and outer rings. Specifically, the inner raceway surface 21 is constructed by continuously forming deformed raceway surfaces of a different configuration from a circumferential surface about a rotation axis X of the inner and outer rings or continuously forming inner deformed raceway surfaces 2k. The outer raceway surface 31 is constructed by continuously forming outer deformed raceway surfaces 3k as deformed raceway surfaces.
All the three inner deformed raceway surfaces 2k constituting the inner raceway surface 21 have the same configuration. All the three outer deformed raceway surfaces 3k constituting the raceway surface 31 also have the same configuration. The inner raceway surface 21 is equally divided into three circumferential segments (at 120° angular space intervals), each of which defines the inner deformed raceway surface 2k. Similarly, the outer raceway surface 31 is also equally divided into three circumferential segments (at 120° angular space intervals), each of which defines the outer deformed raceway surface 3k.
Thus, the rotation urging device 1 is designed as a trisected rotation urging device wherein the three deformed inner raceway surfaces 2k and the three deformed outer raceway surfaces 3k are circumferentially arranged with equal spacing. One cylindrical roller 4 is disposed between a respective pair of deformed raceway surfaces 2k, 3k. The inner deformed raceway surface 2k and the outer deformed raceway surface 3k define a diminishing space (wedge-shaped space) between the inner and outer rings 2, 3 such that a race-to-race distance is progressively decreased in the circumferential direction. In conjunction with the relative rotation of the inner and outer rings 2, 3, a so-called wedge effect occurs to subject the cylindrical roller 4 to elastic compressive deformation.
As described above, the inner raceway surface 21 and the outer raceway surface 31 are respectively constructed by continuously forming the deformed raceway surfaces 2k, 3k so that the inner raceway surface 21 and the outer raceway surface 31 consist solely of the deformed raceway surfaces 2k, 3k, respectively. What is more, the deformed raceway surfaces 2k, 3k are circumferentially arranged with equal spacing. Hence, each of the deformed raceway surfaces 2k, 3k is maximized in the circumferential range, contributing to the expansion of the circumferential range which provides a rotational urging force.

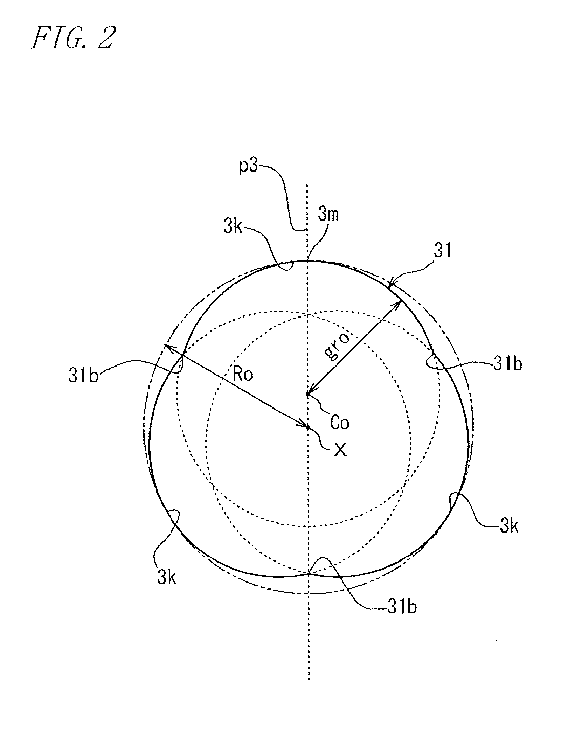

FIG. 2 is a diagram showing a contour of a cross section of the outer raceway surface 31 of the rotation urging device 1. The three outer deformed raceway surfaces 3k constituting the outer raceway surface 31 are each formed in a concave curve. Specifically, the outer deformed raceway surface 3k is defined by a circumferential surface about an outer-race curvature center Co located closer to the raceway surface (the outer deformed raceway surface 3k of interest) than the rotation axis X of the inner and outer rings (hereinafter, also referred to as "shaft center").
A curvature radius gro of this outer deformed raceway surface 3k is smaller than an outer-race gauge radius Ro equivalent to a radius of a circle circumscribed with the contour of the cross section of the outer raceway surface 31, and the radius Ro is the maximum value of a distance between the outer raceway surface 31 and the shaft center X. As seen in the section, the outer-race curvature center Co with respect to each of the three outer deformed raceway surfaces 3k is located on a straight line p3 including an outer-race maximum radius point 3m and the shaft center X, the outer-race maximum radius point 3m defining the maximum distance from the shaft center X.

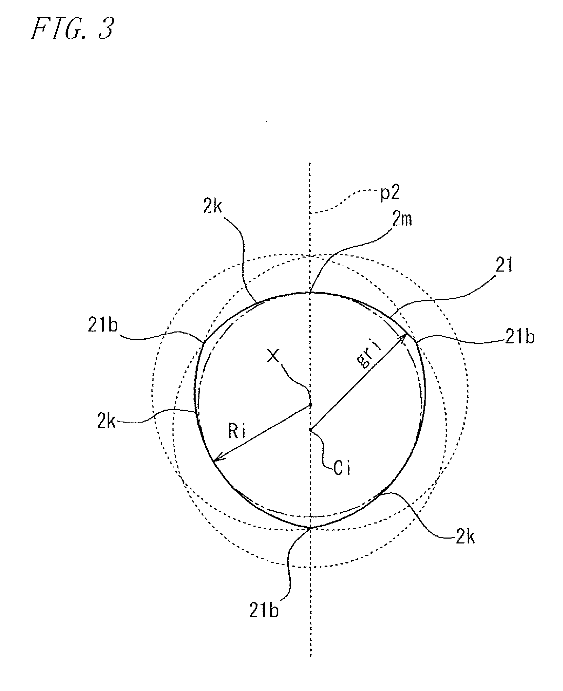

On the other hand, FIG. 3 is a diagram showing a contour of a cross section of the inner raceway surface 21 of the rotation urging device 1. The three inner deformed raceway surfaces 2k constituting the inner raceway surface 21 are each formed in a convex curve. Specifically, the inner deformed raceway surface 2k is defined by a circumferential surface about an inner-race curvature center Ci located farther from the raceway surface (the inner deformed raceway surface 2k of interest) than the shaft center X.
A curvature radius gri of this inner deformed raceway surface 2k is greater than an inner-race gauge radius Ri equivalent to a radius of a circle inscribed in the contour of the cross section of the inner raceway surface 21, the radius Ri is the minimum value of distance between the inner raceway surface 21 and the shaft center X. As seen in the section, the inner-race curvature center Ci with respect to each of three inner deformed raceway surfaces 2k is located on a straight line p2 including an inner-race minimum radius point 2m and the shaft center X, the inner-race minimum radius point 2m defining the minimum distance from the shaft center X.

The rotation urging device 1 including the inner raceway surface 21 and outer raceway surface 31, configured as described above, has a rotational urging function (torsion spring function). The following description is made on this regard.
In the rotation urging device 1, the inner raceway surface 21 and the outer raceway surface 31 are not defined by the circumferential surface about the shaft center X and hence, the configuration of a space (roller rolling space) defined between the inner raceway surface 21 and the outer raceway surface 31 varies according to a relative phase relation between the inner ring 2 and the outer ring 3.
FIG. 1 shows a state where the outer-race maximum radius point 3m of the outer raceway surface 31 is in phase with the inner-race minimum radius point 2m of the inner raceway surface 21. Hereinafter, this state will be referred to as "reference state". In this reference state, each of the cylindrical rollers 4 is located at a circumferential position to make contact with the inner-race minimum radius point 2m and the outer-race maximum radius point 3m (see FIG. 1). This reference state provides the widest clamping gap for the cylindrical roller 4 (race-to-race distance determined at contact positions of the cylindrical roller 4). In this reference state, therefore, a compressive force exerted on the cylindrical roller 4 by these raceway surfaces 2k, 3k is at the minimum value (e.g., 0).
The reference state is designed such that a radial distance between the inner-race minimum radius point 2m and the outer-race maximum radius point 3m is substantially equal to a diameter of the cylindrical roller 4. However, a minor radial clearance (plus clearance or minus clearance) may also be provided.

Subsequently when the inner ring 2 and the outer ring 3 are rotated relative to each other from this reference state, the cylindrical rollers 4 are rolled while the clamping gaps for the cylindrical rollers 4 are progressively narrowed. In conjunction with the relative rotation, therefore, the cylindrical rollers 4 undergo the elastic compressive deformation as compressed by the inner raceway surface 21 and the outer raceway surface 31. Hence, the cylindrical rollers 4 impart a rotational urging force (elastic force: torsion spring force) between the inner ring 2 and the outer ring 3 in a direction to eliminate a phase difference caused by the relative rotation,

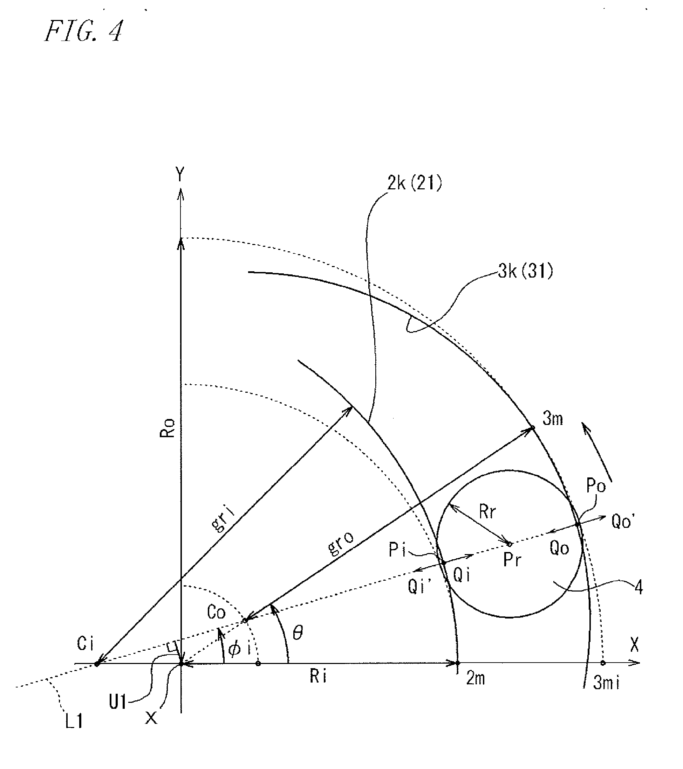

A more detailed description is made on how the above-described rotational urging force (torsion spring force) is produced by the rotation urging device 1. FIG. 4 is a sectional view for explaining about the rotational urging force produced by the rotation urging device 1. For clarity of illustration, the figure shows only the profile lines of the inner deformed raceway surface 2k, outer deformed raceway surface 3k and cylindrical roller 4. FIG. 4 shows a balanced state where the inner ring 2 is fixed while the outer ring 3 is rotated counterclockwise through an angle θ to standstill. In the reference state, the outer-race maximum radius point 3m is located at a position 3mi on an x axis of FIG. 4 and the inner-race minimum radius point 2m is also located on the x axis.
In this reference state, a center Pr of the cylindrical roller 4 is also located on the x axis. When the outer ring 3 is rotated counterclockwise through the angle θ from such a reference state, the cylindrical roller 4 is rolled counterclockwise to a position shown in FIG. 4. A revolution angle of the cylindrical roller 4 thus rolled is an angle φi with respect to the inner-race curvature center Ci.
Provided that Pi represents the center of contact position between the inner deformed raceway surface 2k and the cylindrical roller 4 and that Po represents the center of contact position between the outer deformed raceway surface 3k and the cylindrical roller 4, a distance between Pi and Po at this time is smaller than the distance between the inner-race minimum radius point 2m and the outer-race maximum radius point 3m in the reference state and is smaller than the diameter 2Rr of the cylindrical roller 4 (twice the radius Rr of the cylindrical roller 4).
Therefore, the cylindrical roller 4 undergoes the compressive elastic deformation as receiving a perpendicular force Qi from the inner raceway surface 21 and a perpendicular force Qo from the outer raceway surface 31. In a state where the forces are balanced with each other so that the roller is at standstill, very little tangential force is exerted on the cylindrical roller 4 so that the points Ci, Co, Pi, Pr, Po are aligned on a straight line L1, as shown in FIG. 4.
Thus, vectors of the above perpendicular forces Qi and Qo are in the same direction as the straight line L1 so that a perpendicular force Qi' applied to the inner ring 2 by the cylindrical roller 4 and a perpendicular force Qo' applied to the outer ring 3 by the cylindrical roller 4 are also in the same direction as the straight line L1. The perpendicular force Qo' applied to the outer ring 3 by the cylindrical roller 4 is deviated from a radial direction of the rotation urging device 1 (direction from the center Po of contact position with the cylindrical roller 4 to the shaft center X) so that the perpendicular force includes a component in the radial direction and a clockwise component.
Thus, the outer ring 3 receives a clockwise moment (hereinafter, also referred to as "rotational urging moment") which provides a rotation urging member (torsion spring capability). The magnitude of the rotational urging moment is expressed as [(magnitude of vector Qo')×(distance U1 from shaft center X to straight line L1)]. In the balanced state of FIG. 4, the rotational urging moment is balanced with a moment of an external force to rotate the outer ring 3 counterclockwise.

As described above, the inner deformed raceway surface 2k is the convex curve and the outer deformed raceway surface 3k is the concave curve. Furthermore, the inner deformed raceway surfaces 2k and the outer deformed raceway surfaces 3k form the smoothly-connected curves, respectively. The curve of the inner raceway surface 21 lacks in smooth continuity only at a boundary position 21 b between a respective pair of adjoining inner deformed raceway surfaces 2k (see FIG. 3). The curve of the outer raceway surface 31 lacks in smooth continuity only at a boundary position 31b between a respective pair of adjoining outer deformed raceway surfaces 3k (see FIG. 2).
Therefore, unless the contact positions between the cylindrical roller 4 and the raceway surfaces reach these boundary positions 21b, 31b, the race-to-race distance at the contact positions of the cylindrical roller 4 is progressively varied in conjunction with the relative rotation between the inner ring 2 and the outer ring 3, Thus, the above mechanism explained with reference to FIG. 4 imparts the rotational urging force between the inner ring 2 and the outer ring 3 in the direction to eliminate the phase difference caused by the relative rotation between the inner ring 2 and the outer ring 3.

The rotation urging device 1 is adapted to impart the rotational urging function (torsion spring capability) by means of a simple structure negating the use of the torsion coil spring or the like. Therefore, this rotation urging device 1 suffers less deterioration due to continuous use or change in properties with time, thus achieving a longer service life than the conventional rotation urging device. The rotation urging device 1 makes a member which is capable of bearing a radial load, having a bearing function as well.
Unlike the conventional rotation urging member, the rotation urging device 1 does not require peripheral members such as a connecting portion for connecting the rotation urging member with the inside member and the outside member which rotate relative to each other. Therefore, the rotation urging device can be simplified in the peripheral structure, achieving the reduction of components and costs and the increased reliability. In addition, the member can be easily reduced in size.

Further, the rotation urging device 1 has a much higher degree of freedom in designing torsional rigidity and the like than the conventional rotation urging member. The rotation urging device 1 is notably increased in the degree of design freedom because the design of the deformed raceway surface (curvature, position of curvature center and the like) and the rigidities and the like of the cylindrical roller 4 and the inner and outer rings 2, 3 provide the free design of the spring constant and the like.
Without particularly changing the size (constitution) of the member, the rotation urging device can offer a wide range of setting the characteristic such as torsional rigidity. While the conventional torsion coil spring has the linear (constant) relation between the phase difference (torsion angle) and the torsional rigidity, the rotation urging device 1 is also adapted for the free variation of the torsional rigidity in accordance with the phase difference, such as nonlinear variation of the torsional rigidity relative to the phase difference (torsion angle).

The deformed raceway surfaces 2k, 3k define the respective curved surfaces, curvature centers of which are deviated from the rotation axis X of the inner and outer rings. Since the deformed raceway surfaces 2k, 2k are circumferential surfaces, they are easier to design and machine (manufacture) than a free-form surface, for example.

The rotation urging device 1 includes the inner raceway surface 21 constituted by the three inner deformed raceway surfaces 2k continuously formed and circumferentially arranged with equal spacing, the outer raceway surface 31 constituted by the three outer deformed raceway surfaces 3k continuously formed and circumferentially arranged with equal spacing, and the three cylindrical rollers 4 and has the arrangement wherein the clamping gaps for all the rolling elements, as determined at all the cylindrical rollers 4, are uniformly varied in conjunction with the inner and outer rings 2, 3.
The circumferential ranges of the deformed raceway surfaces 21, 31 can be maximized by circumferentially arranging the respective deformed raceway surfaces 2k, 3k with equal spacing and composing the respective raceway surfaces 21, 31 of the continuous deformed raceway surfaces 2k, 3k.
Hence, the rotation urging device can be even further expanded in the circumferential range to provide the torsion spring capability (rotational urging function). The outer ring is adapted to receive equal forces from all the rolling elements in the same direction so that the outer ring is imparted with a uniform torsion spring capability in the circumferential direction thereof. Thus, the rotation urging device 1 achieves a high rotational accuracy.

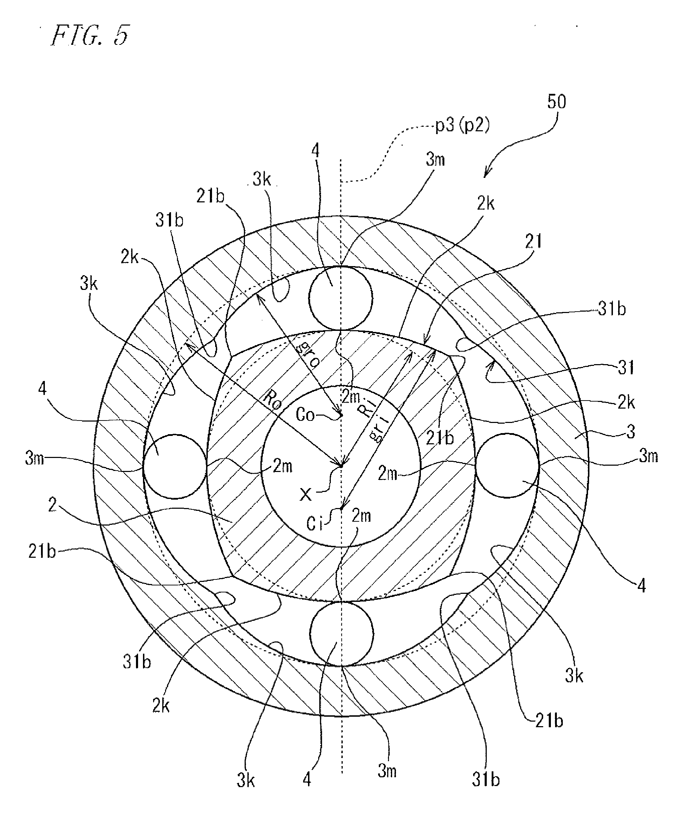

FIG. 5 is a sectional view showing a rotation urging device 50 according to a second embodiment of the invention. While the rotation urging device 1 shown in FIG. 1 is of the trisected type, this rotation urging device 50 is of a quadrisected type. Similarly to FIG. 1, FIG. 5 shows the cross section of the rotation urging device in the reference state. The device has the same basic construction as that of the rotation urging device 1 except that the number of dividing equally is increased from three to four. In the following, therefore, description on the similar parts to those of the rotation urging device 1 is dispensed with.

Similarly to the rotation urging device 1, the rotation urging device 50 also has the arrangement wherein the inner raceway surface 21 is constituted by the continuous inner deformed raceway surfaces 2k as the deformed raceway surface having the different configuration from the circumferential surface about the rotation axis X of the inner and outer rings and wherein the outer raceway surface 31 is constituted by the continuous outer deformed raceway surfaces 3k as the deformed raceway surface. Therefore, the inner raceway surface 21 and the outer raceway surface 31 consist of the deformed raceway surfaces 2k, 3k, respectively.
All the four inner deformed raceway surfaces 2k constituting the inner raceway surface 21 have the same configuration, while all the four outer deformed raceway surfaces 3k constituting the raceway surface 31 also have the same configuration. The inner raceway surface 21 is equally divided into four circumferential segments (at 90° angular space intervals), each of which defines the inner deformed raceway surface 2k. Similarly, the outer raceway surface 31 is also equally divided into four circumferential segments (at 90° angular space intervals), each of which defines the outer deformed raceway surface 3k. Thus, the rotation urging device 50 makes a quadrisected rotation urging device wherein the four inner deformed raceway surfaces 2k and the four outer deformed raceway surfaces 3k are circumferentially arranged with equal spacing.

As shown in FIG. 5, the four outer deformed raceway surfaces 3k constituting the outer raceway surface 31 are each formed in a concave curve. Specifically, the outer deformed raceway surface 3k is defined by the circumferential surface about the outer-race curvature center Co located closer to the raceway surface (the outer deformed raceway surface 3k of interest) than the rotation axis X of the inner and outer rings (hereinafter, also referred to as "shaft center X").
The curvature radius gro of this outer deformed raceway surface 3k is smaller than the outer-race gauge radius Ro equivalent to the radius of the circle circumscribed with the contour of the cross section of the outer raceway surface 31, the radius Ro is the maximum value of the distance between the outer raceway surface 31 and the shaft center X. As seen in the section, the outer-race curvature center Co with respect to each of the four outer deformed raceway surfaces 3k is located on the straight line p3 including the outer-race maximum radius point 3m and the shaft center X, the outer-race maximum radius point 3m defining the maximum distance from the shaft center X.

On the other hand, the four inner deformed raceway surfaces 2k constituting the inner raceway surface 21 are each formed in a convex curve. Specifically, the inner deformed raceway surface 2k is defined by the circumferential surface about the inner-race curvature center Ci located farther from the raceway surface (the inner deformed raceway surface 2k of interest) than the shaft center X.
The curvature radius gri of this inner deformed raceway surface 2K is greater than the inner-race gauge radius Ri equivalent to the radius of the circle inscribed in the contour of the cross section of the inner raceway surface 21, and the radius Ri is the minimum value of the distance between the inner raceway surface 21 and the shaft center X. As seen in the section, the inner-race curvature center Ci with respect to each of the three inner deformed raceway surfaces 2k is located on a plane p2 including the inner-race minimum radius point 2m and the shaft center X, the inner-race minimum radius point 2m defining the minimum distance from the shaft center X.
This rotation urging device 50 exhibits the rotational urging function based on the same principle as that described with reference to the above rotation urging device 1. It is noted that the number of segments equally spacing the deformed raceway surfaces and the rolling elements in the circumferential direction is not limited to three and four of the above embodiments but may be properly defined according to the characteristics required of the rotation urging device.

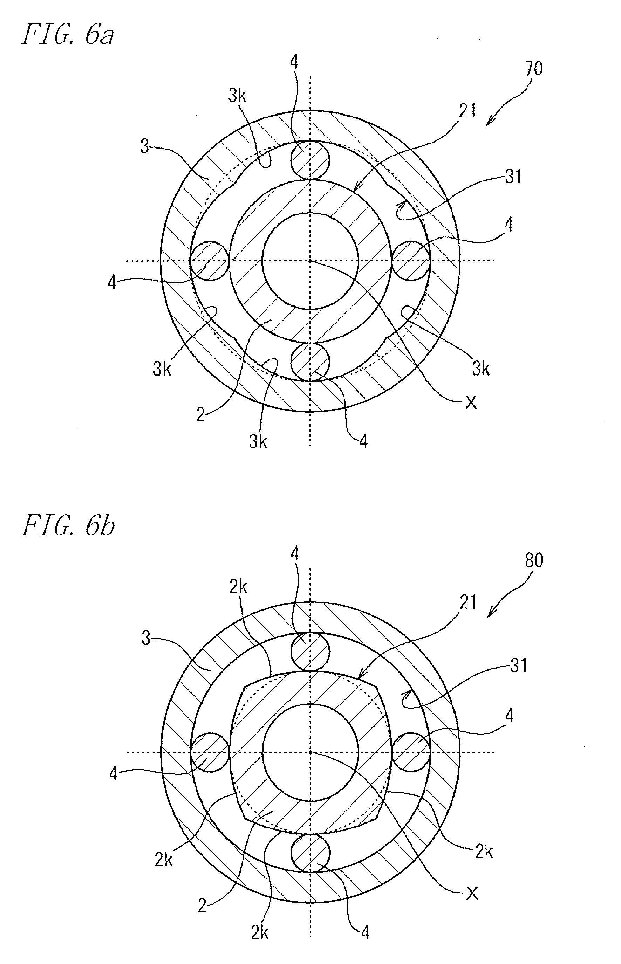

FIG. 6 is a group of sectional views showing rotation urging devices 70, 80 as examples of the modification wherein either the outer raceway surface 31 or the inner raceway surface 21 is defined by the circumferential surface about the shaft center X.
In the rotation urging device 70 shown in FIG. 6a, the outer raceway surface 31 is constituted by the four continuous outer deformed raceway surfaces 3k just as in the rotation urging device 50 of FIG. 5. However, the inner raceway surface 21 is defined by the circumferential surface about the shaft center X. In the rotation urging device 80 shown in FIG. 6b, on the other hand, the inner raceway surface 21 is constituted by the four continuous inner deformed raceway surfaces 2k just as in the rotation urging device 50 of FIG. 5.
However, the outer raceway surface 31 is defined by the circumferential surface about the shaft center X. In this manner the invention may be constituted such that either the inner raceway surface or the outer raceway surface is defined by the circumferential surface about the shaft center X. In this case, the manufacture process is simplified because it only requires either one of the inner raceway surface and the outer raceway surface to be machined into the deformed raceway surface. Since only one of the raceway surfaces need be machined into the deformed raceway surface, it is easy to increase the machining accuracy of the rotation urging device.

In the rotation urging device 1 shown in FIG. 1, the rotation urging device 50 shown in FIG. 5 and the modifications thereof 70, 80 shown in FIG. 6, the rotational urging force acting in a direction to eliminate the phase difference caused by the relative rotation is provided in conjunction with not only one-way relative rotation but also with two-way relative rotation. Therefore, these rotation urging devices may be particularly favorably used for purposes which require the torsion spring capability in two directions (two-way torsion spring capability) rather than in one direction.

The range of relative rotation provided by the above embodiments is dependent upon the design of the deformed raceway surfaces 2k, 3k, the elastic deformable ranges of the rolling element 4 and the inner and outer rings 2, 3, and the like. If the magnitude of the torque applied between the inner and outer rings is unlimited, the inner and outer rings are capable of relative rotation to the limits of the elastic deformable ranges of the rolling element and the inner and outer rings.
In some design of the deformed raceway surfaces 2k, 3k, therefore, the relative rotation between the inner and outer rings can rollably move the rolling element 4 beyond the boundary position 21 b or 31 b between the adjoining deformed raceway surfaces (see FIG. 1, FIG. 5). In this case, the rotation urging device also functions as a torque limiter which can avoid the transmission of excessive torque. The arrangement is made such that the relative rotation between the inner and outer rings permits the rolling element to move to the adjoining deformed raceway surface, whereby the range of the relative rotation between the inner and outer rings is made infinite and whereby a certain limit may be set to the torque applied between the inner and outer rings.
The limit value (torque limit) may be arbitrarily defined according to the configuration of the deformed raceway surface, data on the rolling element, or the like. On the other hand, the relative rotation between the inner and outer rings can also be limited to a certain range by making a design such that an excessive torque applied between the inner and outer rings cannot drive the rolling element to the adjoining deformed raceway surface. In this case, the rotation urging device can function as a two-way clutch, for example.

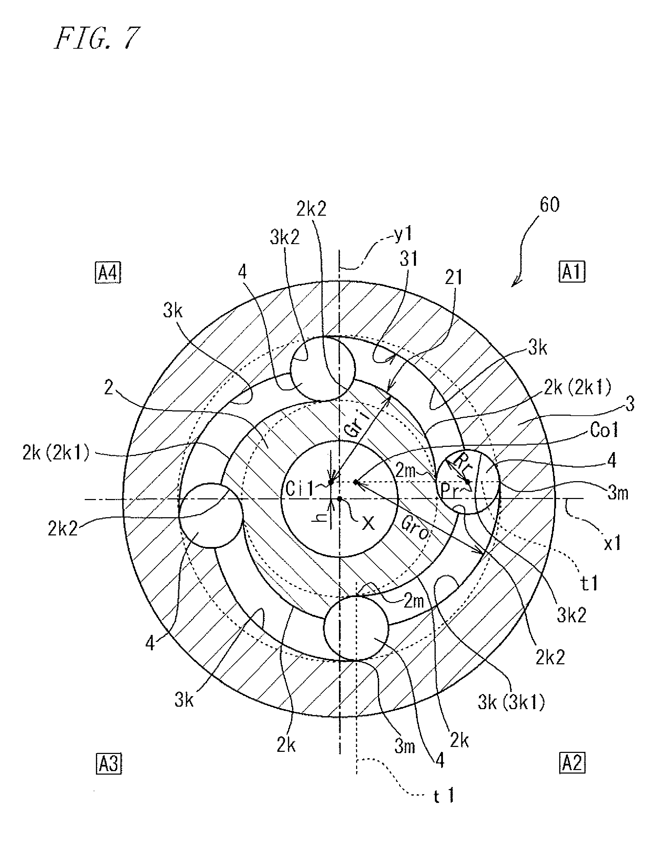

FIG. 7 is a sectional view showing a rotation urging device 60 according to a third embodiment of the invention. This rotation urging device 60 is a quadrisection rotation urging device wherein the four inner deformed raceway surfaces 2k, the four outer deformed raceway surfaces 3k and the four rolling elements 4 are circumferentially arranged with equal spacing. However, this rotation urging device differs from the above embodiments in that the relative rotation to provide the torsion spring capability is limited to one direction.

The rotation urging device 60 differs from the above-described embodiments in that each of the deformed raceway surfaces 2k, 3k is constituted by a curve having two curvature radii but not by a curve having a single curvature radius. Specifically, each of the inner deformed raceway surfaces 2k consists of an inner rolling surface 2k1 having a curvature radius Gri and an inner roller retaining surface 2k2 having the same curvature radius as the radius Rr of the cylindrical roller 4.
One end of the inner rolling surface 2k1 (on the smaller diameter side thereof) defines the inner-race minimum radius point 2m which defines a boundary between the inner rolling surface 2k1 and the inner roller retaining surface 2k2. The inner rolling surface 2k1 and the inner roller retaining surface 2k2 are smoothly connected at the inner-race minimum radius point 2m.
Each of the outer deformed raceway surfaces 3k consists of an outer rolling surface 3k1 having a curvature radius Gro and an outer roller retaining surface 3k2 having the same curvature radius as the radius Rr of the cylindrical roller 4. One end of the outer rolling surface 3k1 (on the greater diameter side thereof) defines the outer-race maximum radius point 3m which defines a boundary between the outer rolling surface 3k1 and the outer roller retaining surface 3k2. The outer rolling surface 3k1 and the outer roller retaining surface 3k2 are smoothly connected at the outer-race maximum radius point 3m.

FIG, 7 shows a state where the cylindrical roller 4 is in contact with the outer-race maximum radius point 3m and the inner-race minimum radius point 2m and is in surface contact with the inner roller retaining surface 2k2 and the outer roller retaining surface 3k2. Hereinafter, this state will be referred to as "second reference state". In this second reference state, the compressive force exerted on the cylindrical rollers 4 by the raceway surfaces 21, 31 is at the minimum value (e.g., 0).
From this second reference state, the rotation urging device 60 can be brought into relative rotation only in one direction. To illustrate, assume a case where the inner ring 2 is fixed and the outer ring 3 is allowed to rotate. From the second reference state shown in FIG. 7, the outer ring 3 can only be brought into counterclockwise rotation but cannot be rotated in the clockwise direction. Therefore, the rotation urging device 60 is particularly useful in an application where the relative rotation between the inner ring 2 and the outer ring 3 is limited to only one direction.

In the rotation urging device 60, the rotational urging force acting in the direction to eliminate the phase difference caused by the relative rotation between the inner ring 2 and the outer ring 3 develops only in the clockwise direction but not in the counterclockwise direction as seen in FIG. 7, regardless of the phase relation between the inner ring 2 and the outer ring 3. Therefore, the rotation urging device 60 may be favorably used in an application which requires the rotational urging force only in one direction.

Of the deformed raceway surfaces 2k, 3k of the rotation urging device 60, the inner rolling surface 2k1 and the outer rolling surface 3k1, as the raceway surfaces for the cylindrical roller 4 to roll on, have their curvature centers deviated from the curvature centers of the inner deformed raceway surface 2k and the outer deformed raceway surface 3k of the above-described rotation urging devices 1, 50. In the cross section of FIG. 7 showing the second reference state, it is assumed that straight lines parallel to a straight line t1 connecting the outer-race maximum radius point 3m with the inner-race minimum radius point 2m and passing through the shaft center X are defined as a first straight line x1 and a second straight line y1. As shown in FIG. 7, the first straight line x1 and the second straight line y1 intersect at right angles.
These first straight line x1 and second straight line y1 divide the cross section of FIG. 7 into the same number of regions as the equally spaced components (namely, four) (an upper right region A1, a lower right region A2, a lower left region A3 and an upper left region A4 in the clockwise order starting from the upper right region A1 of FIG. 7). It is noted here that a curvature center Ci1 of an inner rolling surface 2k1 primarily belonging to the region A1, for example, is located in the region A4. A curvature center Col of an outer rolling surface 3k1 primarily belonging to the region A2, for example, is located in the region A1,
That is, the curvature center of the inner rolling surface 2k1 primarily belonging to any one of the four regions divided by the above straight lines x1 and y1 is located in another region adjacent thereto in the rotational direction of the outer ring in which direction the torsion spring capability is provided (in the counterclockwise direction in the rotation urging device 60). Similarly, the curvature center of the outer rolling surface 3k1 primarily belonging to any one of the above four regions is located in another region adjacent thereto in the rotational direction of the outer ring in which direction the torsion spring capability is provided (in the counterclockwise direction in the rotation urging device 60).

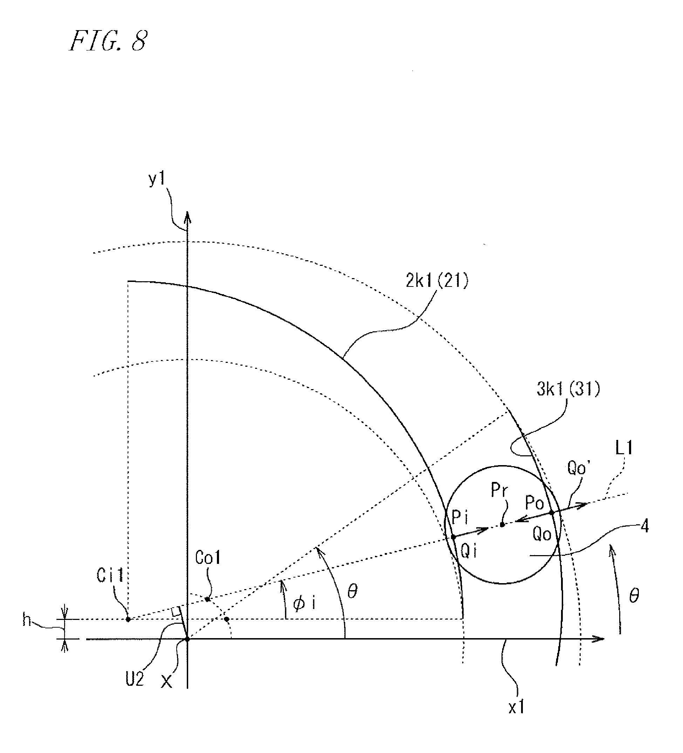

The rotation urging device 60 has the characteristic of facilitating the increase of allowable torque as compared with the above-described rotation urging device 1 and rotation urging device 50. FIG. 8 shows the balanced state which is established by fixing the inner ring 2 of the rotation urging device 60 in the second reference state, followed by rotating the outer ring 3 counterclockwise through an angle θ to standstill. The rotation of the outer ring 3 causes the cylindrical roller 4 to roll and revolute through an angle øi about the curvature center Ci1 of the inner rolling surface 2k1.
At this time, the perpendicular force Qo' exerted on the outer ring 3 by the rolling element 4 is in the same direction as the straight line L1 connecting the center Po of contact position between the rolling element 4 and the outer raceway surface 31 with the curvature center Ci1 of the inner rolling surface 2k1, just as described with reference to FIG. 4. Therefore, the perpendicular force Qo' has a clockwise component as seen in FIG. 8, which constitutes the rotational urging moment providing the torsion spring capability.
It is noted here that unlike the curvature center Ci of the inner raceway surface shown in FIG. 4, the curvature center Ci1 of the inner rolling surface 2k1 shown in FIG. 8 (the inner rolling surface 2k1 primarily belonging to the above-described region A1) is deviated a distance h from the shaft center X in the direction of the second straight line y1. Because of the deviation by the distance h, the vector of the perpendicular force Qo' is directed more horizontal as compared with the case of FIG. 4.
In other words, a length of a perpendicular dropped from the shaft center X to the straight line L1 is equivalent to a length of a moment arm perpendicular to the direction of the above perpendicular force Qo'. The moment arm in FIG. 8 has a greater length U2 than the length U1 of the moment arm in FIG. 4.
Accordingly, the rotational urging moment [(magnitude of perpendicular force Qo')×(length U2)] of FIG. 8 is greater than the rotational urging moment [(magnitude of perpendicular force Qo')×(length U1)] of FIG. 4, provided that the perpendicular force Qo' is of the same magnitude. As compared with the constitution of FIG. 4, the constitution of FIG. 8 is adapted to produce the greater rotational urging force from the smaller external force (torque). It is therefore easier to increase the allowable torque. In short, the constitution of FIG. 8 is more easily decreased in the torsional rigidity for the same allowable torque than the constitution of Fig. 4.

Unlike the conventional torsion coil spring and the like, the rotation urging device of the invention also has the bearing function. Namely, the rotation urging device of the invention is capable of bearing the radial load and may also be adapted to bear an axial load and a moment load by adopting a constitution employed by a bearing. It is absolutely impossible for the conventional torsion coil spring, rubber and the like to provide the function to bear the load exerted between the inner and outer rings. If the rotation urging device of the invention is used in an application where the conventional rotation urging member is used in combination with a support bearing, the invention offers advantages of reducing load on the support bearing, negating the need for the support bearing and the like.

The invention does not particularly limit the configuration and the like of the rolling element so long as the rolling element is rollably moved in conjunction with the relative rotation of the inner ring and the outer ring. Accordingly, the rolling element is not limited to the cylindrical roller illustrated by the foregoing embodiments but may be, for example, a ball, tapered roller or the like.
Any rolling element used in the conventional bearings may be applied as needed. A hollow rolling element prone to elastic compressive deformation (such as a hollow cylindrical roller or hollow ball) may also be used in the interest of increasing the freedom in defining the torsional rigidity. A suitable material of the rolling element may be selected according to the performance required of the rotation urging device.

In the foregoing embodiments, consideration is primarily given to local elastic deformation of the rolling element and of the inside member (inner ring 2) and the outside member (outer ring 3) at contact areas thereof during the relative rotation. However, it is also possible to increase the macroscopic elastic deformation of the inside member and/or the outside member by reducing, for example, the thickness of the inside member and/or the outside member.
An alternative constitution may also be made such that the rolling element is elastically deformed very little but the inside member or the outside member is primarily subjected to the elastic deformation to provide the rotational urging force. The degree of design freedom of the invention is further increased by adding the rigidity of the inside member or the outside member as a design element.
The rigidity of the inside or outside member (rigidity against a pressing force of the rolling element) may be varied by changing the thickness (mean thickness), thickness distribution or material of the inside member (inner ring 2) or the outside member (outer ring 3). As a mode to vary the thickness distribution, the thickness of the inside member or the outside member may be uniformly varied in the circumferential direction thereof. In the above-described rotation urging device 1 and rotation urging device 50, the outside surface of the outer ring 3 is defined by the circumferential surface about the shaft center X.
However, the outer ring 3 may also be formed with a concave/convex pattern in the outside surface thereof, for example. As an example, the outside surface of the outer ring 3 may be formed with a concave defined by a smooth curve in correspondence to the phase of the boundary position 316. Similarly to the outer ring 3, the inner ring 2 may also be formed with a concave/convex pattern or the like in an inside surface thereof.

### Verification by Examples

Examples of the invention were fabricated to verify the characteristics such as torsional rigidity. In the following tests, a steel material having a Young's modulus of 207 900 MPa and a Poisson's ratio of 0.3 was used for the inner and outer rings and the rolling element.

### Test 1: Influence of Roller Radius

The trisected rotation urging device 1 (dividing equally number Z = 3) shown in FIG. 1, the quadrisected rotation urging device 50 (dividing equally number Z = 4) shown in FIG. 5 and an unillustrated five-sectioned rotation urging device (dividing equally number Z = 5) were subjected to the test. The respective types of rotation urging devices followed specifications 1 to 5 shown in a Table 1, so that 15 kinds of examples in total were fabricated and evaluated to examine the influence of the roller radius Rr.
In the following graphs showing the test results, Z = 3 represents the evaluation result on the trisected rotation urging device 1 (roller number Z = 3), Z = 4 represents the evaluation result on the quadrisected rotation urging device 50 (roller number Z = 4) shown in FIG. 5, and Z = 5 represents the evaluation result on the five-sectioned rotation urging device (roller number Z = 5).

**Table 1**

| | Symbol | Unit | Spec 1 | Spec 2 | Spec 3 | Spec 4 | Spec 5 |
|---|---|---|---|---|---|---|---|
| Inner-race G radius | Ri | mm | 13.5 | 12.5 | 11.5 | 10.5 | 9.5 |
| Outer-race G radius | Ro | mm | 17.5 | 18.5 | 19.5 | 20.5 | 21.5 |
| Roller radius | Rr | mm | 2.0 | 3.0 | 4.0 | 5.0 | 6.0 |
| Roller effective length | -- | mm | 26.0 | 26.0 | 26.0 | 26.0 | 26.0 |
| Mean raceway diameter | -- | mm | 31.0 | 31.0 | 31.0 | 31.0 | 31.0 |
| Radial clearance | -- | mm | 0.00 | 0.00 | 0.00 | 0.00 | 0.00 |

| | | | | | | | |
|---|---|---|---|---|---|---|---|
| Note: G radius means the gauge radius. | | | | | | | |

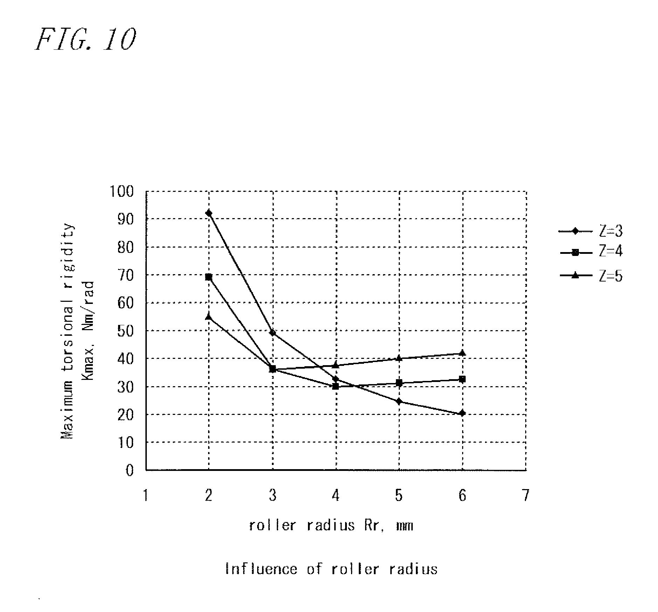

FIG. 10 is a graph showing the evaluation results of the Test 1. As shown in the graph, the maximum torsional rigidity Kmax(Nm/rad) tends to decrease with the increase of the roller radius. The maximum torsional rigidity Kmax means the maximum torsional rigidity obtained in the allowable range of relative rotation. The following experimental tests were conducted with a predetermined upper limit set to the torque applied between the inner and outer rings (hereinafter, also referred to as "upper torque limit") in consideration of contact surface pressure that the roller can bear.
Hereinafter, a case where the cylindrical roller 4 is not moved to the adjoining deformed raceway surface although the torque applied thereto is increased to the upper limit will be referred to as "surface pressure limit", and a case where the cylindrical roller 4 is moved to the adjoining deformed raceway surface by a torque less than the upper torque limit will be referred to as "angle limit". Therefore, an example exhibiting the angle limit makes the rotation urging device having the torque limiter function, as described above.
In the above Test 1, the Z = 3 devices of all the specifications exhibited the surface pressure limit. The Z = 4 devices of the specifications 1, 2 exhibited the surface pressure limit, and the Z = 4 devices of the specifications 3 to 5 exhibited the angle limit. The Z = 5 device of the specification 1 exhibited the surface pressure limit, and the Z = 5 devices of the specifications 2 to 5 exhibited the angle limit.
The graph of FIG. 10 shows that the maximum torsional rigidities of the Z = 4 and Z = 5 devices take minimal values. This indicates that an operation mode shifts from the surface pressure limit to the angle limit.

### Test 2: Influence of Roller Effective Length

The above rotation urging devices of the types Z = 3 to Z = 5 were respectively modified according to specifications 6 to 10 shown in a Table 2. Thus, 15 kinds of examples in total were fabricated and evaluated to examine the influence of the roller effective length.

**Table 2**

| | Symbol | Unit | Spec 6 | Spec 7 | Spec 8 | Spec 9 | Spec10 |
|---|---|---|---|---|---|---|---|
| Inner-race G radius | Ri | mm | 11.5 | 11.5 | 11.5 | 11.5 | 11.5 |
| Outer-race G radius | Ro | mm | 19.5 | 19.5 | 19.5 | 19.5 | 19.5 |
| Roller radius | Rr | mm | 4.0 | 4.0 | 4.0 | 4.0 | 4.0 |
| Roller effective length | -- | mm | 15.0 | 20.0 | 26.0 | 30.0 | 35.0 |
| Mean raceway diameter | -- | mm | 31.0 | 31.0 | 31.0 | 31.0 | 31.0 |
| Radial clearance | -- | mm | 0.00 | 0.00 | 0.00 | 0.00 | 0.00 |

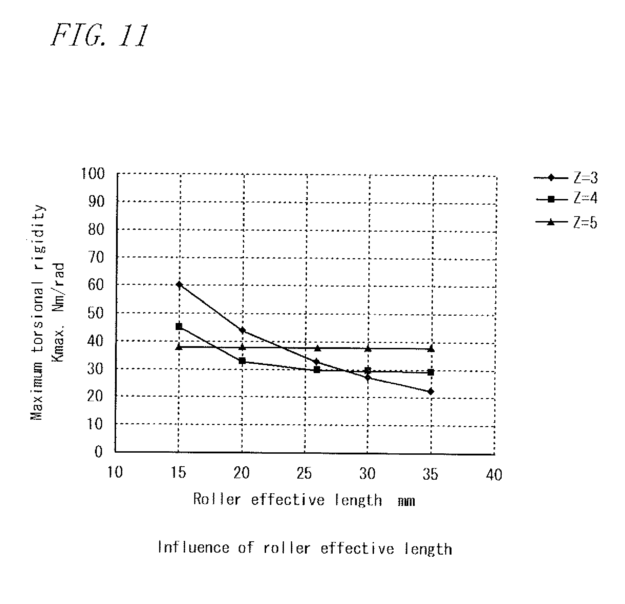

FIG. 11 is a graph showing the evaluation results of the Test 2. As shown in the graph, the maximum torsional rigidity Kmax tends to decrease with the increase of the roller effective length. In the Test 2, the Z = 3 devices of all the specifications exhibited the surface pressure limit. The Z = 4 devices of the specifications 6, 7 exhibited the surface pressure limit, and the Z = 4 devices of the specifications 8 to 10 exhibited the angle limit. The Z = 5 device of all the specifications exhibited the angle limit.

### Test 3: Influence of Mean Raceway Diameter

The above rotation urging devices of the types Z = 3 to Z = 5 were respectively modified according to specifications 11 to 15 shown in a Table 3. Thus, 15 kinds of examples in total were fabricated and evaluated to examine the influence of the mean raceway diameter.

**Table 3**

| | Symbol | Unit | Spec 11 | Spec 12 | Spec 13 | Spec 14 | Spec15 |
|---|---|---|---|---|---|---|---|
| Inner-race G radius | Ri | mm | 6.0 | 8.5 | 11.5 | 13.5 | 16.0 |
| Outer-race G radius | Ro | mm | 14.0 | 16.5 | 19.5 | 21.5 | 24.0 |
| Roller radius | Rr | mm | 4.0 | 4.0 | 4.0 | 4.0 | 4.0 |
| Roller effective length | -- | mm | 26.0 | 26.0 | 26.0 | 26.0 | 26.0 |
| Mean raceway diameter | -- | mm | 20.0 | 25.0 | 31.0 | 35.0 | 40.0 |
| Radial clearance | -- | mm | 0.00 | 0.00 | 0.00 | 0.00 | 0.00 |

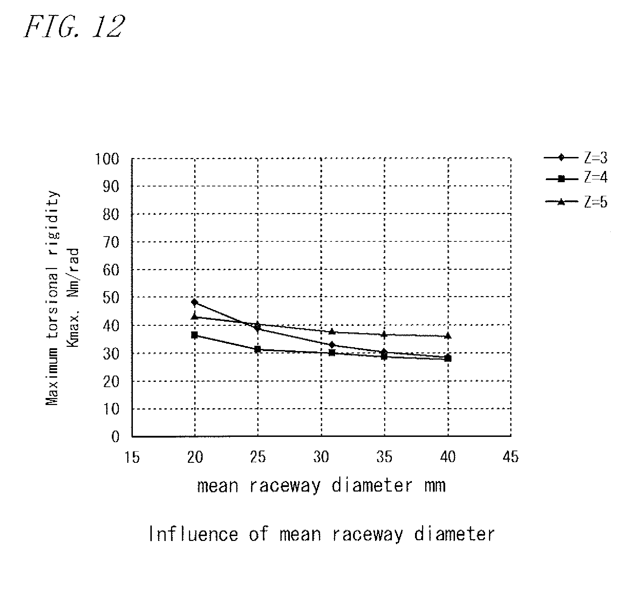

FIG. 12 is a graph showing the evaluation results of the Test 3. As shown in the graph, the maximum torsional rigidity Kmax(Nm/rad) tends to decrease with the increase of the mean raceway diameter. In the Test 3, the Z = 3 devices of all the specifications exhibited the surface pressure limit. The Z = 4 device of the specification 11 exhibited the surface pressure limit, and the Z = 4 devices of the specifications 12 to 15 exhibited the angle limit. The Z = 5 devices of all the specifications exhibited the angle limit.

### Test 4: Influence of Radial Clearance

The above rotation urging devices of the types Z = 3 to Z = 5 were respectively modified according to specifications 16 to 20 shown in a Table 4.
Thus, 15 kinds of examples in total were fabricated and evaluated to examine the influence of the radial clearance. The radial clearance means a radial clearance determined in the above-described reference state.

**Table 4**

| | Symbol | Unit | Spec 16 | Spec 17 | Spec 18 | Spec 19 | Spec20 |
|---|---|---|---|---|---|---|---|
| Inner-race G Radius | Ri | mm | 11.490 | 11.495 | 11.500 | 11.505 | 11.510 |
| Outer-race G radius | Ro | mm | 19.510 | 19.505 | 19.500 | 19.495 | 19.490 |
| Roller radius | Rr | mm | 4.0 | 4.0 | 4.0 | 4.0 | 4.0 |
| Roller effective length | -- | mm | 26.0 | 26.0 | 26.0 | 26.0 | 26.0 |
| Mean raceway diameter | -- | mm | 31.0 | 31.0 | 31.0 | 31.0 | 31.0 |
| Radial clearance | -- | mm | -0.02 | -0.01 | 0.00 | 0.01 | 0.02 |

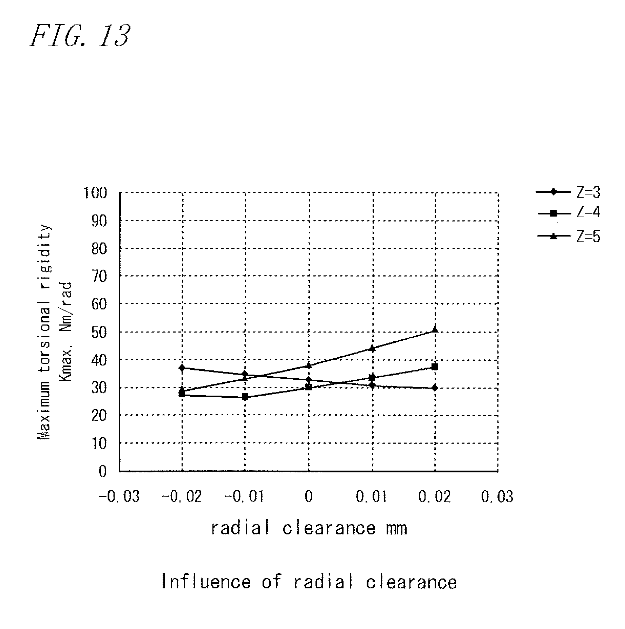

FIG. 13 is a graph showing the evaluation results of the Test 4. The graph shows that the maximum torsional rigidity of the Z = 4 device take a minimal value. This indicates that the radial clearance includes an optimum value to reduce the maximum torsional rigidity. In the Test 4, the Z = 3 devices of all the specifications exhibited the surface pressure limit. The Z = 4 device of the specification 16 exhibited the surface pressure limit, and the Z = 4 devices of the specifications 17 to 20 exhibited the angle limit.
The Z = 5 devices of all the specifications exhibited the angle limit. The graph shows that the value of the Z = 3 devices is monotonically decreased. This is because the Z = 3 devices of all the specifications exhibited the surface pressure limit. The value of the Z = 5 devices is monotonically increased. This is because the Z = 5 devices of all the specifications exhibited the angle limit.

### Test 5: Relations between Inner-Outer Ring Torque and Angle of Relative Rotation and between Torsional Rigidity and Angle of Relative Rotation

The Z = 4 (quadrisected) rotation urging device 50 shown in FIG. 5 was modified according to the following specification. Thus, an example having the following specification was fabricated and evaluated to examine a relation between the inner-outer ring torque and the angle of relative rotation as well as a relation between the torsional rigidity and the angle of relative rotation.

### Specification of Example for Test 5

| | |
|---|---|
| Inner-race gauge radius Ri: | 11.505 mm |
| Outer-race gauge radius Ro: | 19.495 mm |
| Roller radius Rr: | 4.0 mm |
| Roller effective length: | 26.0 mm |
| Mean raceway diameter: | 31.0 mm |
| Radial clearance: | -0.01 mm |
| Curvature radius gri of inner deformed raceway surface 2k: | 11.635 mm |
| Curvature radius gro of outer deformed raceway surface 3k: | 19.293 mm |

In the Test 5, only the outer ring was rotated with the inner ring fixed to place. Hereinafter, therefore, the inner-outer ring torque, namely the torque exerted between the inner and outer rings will be referred to as "outer-ring torque", the angle of relative rotation between the inner and outer rings will be referred to as "outer-ring rotation angle", and the maximum angle of relative rotation between the inner and outer rings will be referred to as "maximum outer-ring rotation angle".

This example was evaluated by the experimental test setting the upper torque limit to 12.046 (Nm). The example had the maximum torsional rigidity Kmax of 26.311 (Nm/rad) and the maximum outer-ring rotation angle of 69.849 (deg). In this example, the maximum torsional rigidity Kmax was observed when the example was in the angle limit.

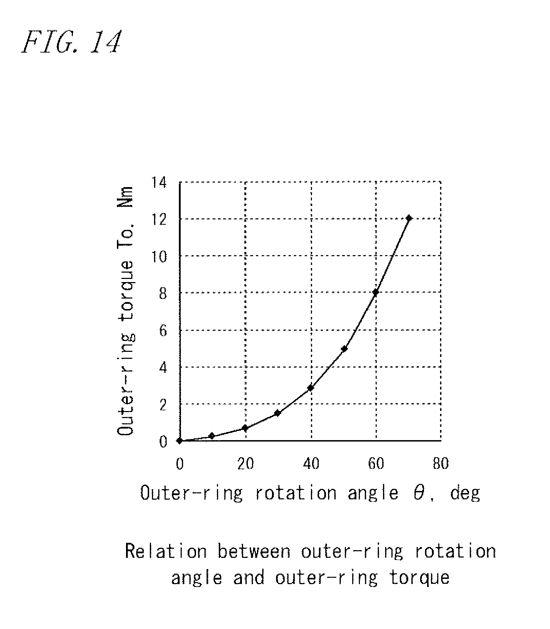

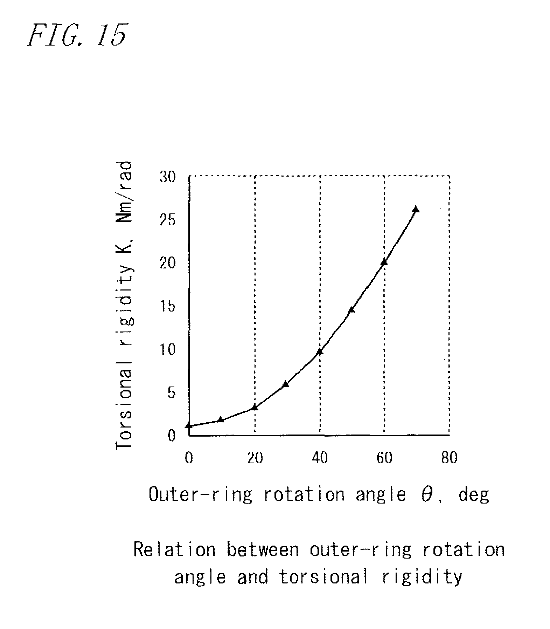

In the Test 5, the example was examined for the relation between the outer-ring rotation angle θ and the outer-ring torque To, which is shown in a graph of FIG. 14. The example was examined for the relation between the outer-ring rotation angle θ and the torsional rigidity K(Nm/rad), which is shown in a graph of FIG. 15. As indicated by the graphs of FIG. 14 and FIG. 15, the example subjected to the torque of the upper limit value (about 12 Nm) exhibits a torsional rigidity K (or the maximum torsional rigidity Kmax) of about 26 Nm/rad. Both the outer-ring torque and the torsional rigidity K are in nonlinear relation to the outer-ring rotation angle θ. The example exhibits the characteristics which cannot be obtained from the conventional torsion coil spring or the like.

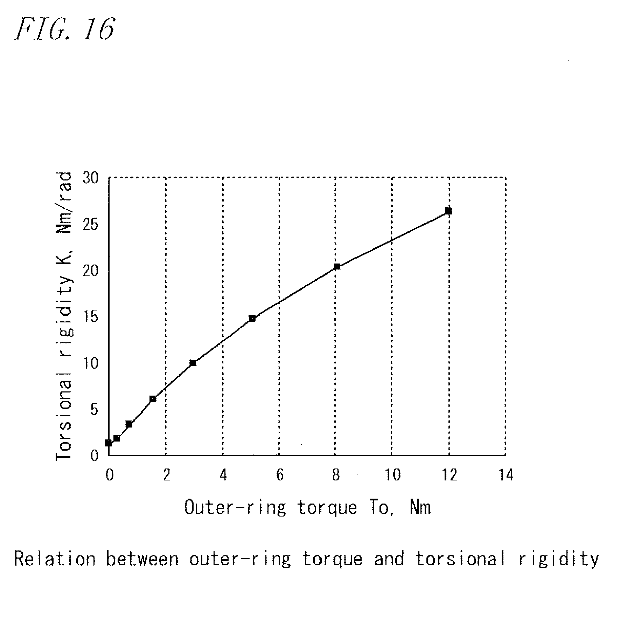

FIG. 16 is a graph showing a relation between the outer-ring torque To and the torsional rigidity K, which is obtained from the example for the Test 5. The graph indicates that the torsional rigidity K decreases with the decrease of the outer-ring torque To. This means that the rotation urging device, which is used in a damper pulley or the like, is increased in rotational variation accommodating performance as the applied torque is decreased.

### Test 6: Evaluation Using One-way Type Examples

Next, a test was conducted using a rotation urging device of the same type as the rotation urging device 60 (shown in FIG. 7) wherein the direction of the relative rotation providing the torsion spring capability is limited to one way. It is noted here that the rotation urging device used in the test was not of the four-roller type shown in FIG. 7 but of a six-sectioned type. The specification of this example is as follows.

### Specification of Example for Test 6

- Inner-race gauge radius Ri:: 11.500 mm
- Outer-race gauge radius Ro:: 19.500 mm
- Roller radius Rr:: 4.0 mm
- Roller effective length:: 26.0 mm
- Mean raceway diameter:: 31.0mm
- Radial clearance:: 0.00 mm
- Curvature radius Gri of inner deformed raceway surface 2k1:: 11.537 mm
- Curvature radius Gro of outer deformed raceway surface 3k1:: 19.460 mm
- Deviation h from shaft center X (see FIG. 7):: 0.05 mm

This example was evaluated by the experimental test setting the upper torque limit to 12.600 (Nm). The example had the maximum outer-ring rotation angle of 66.514 (deg), at which the example exhibited a torsional rigidity K of 10.357 (Nm/rad). It is noted that the example exhibited the surface pressure limit.

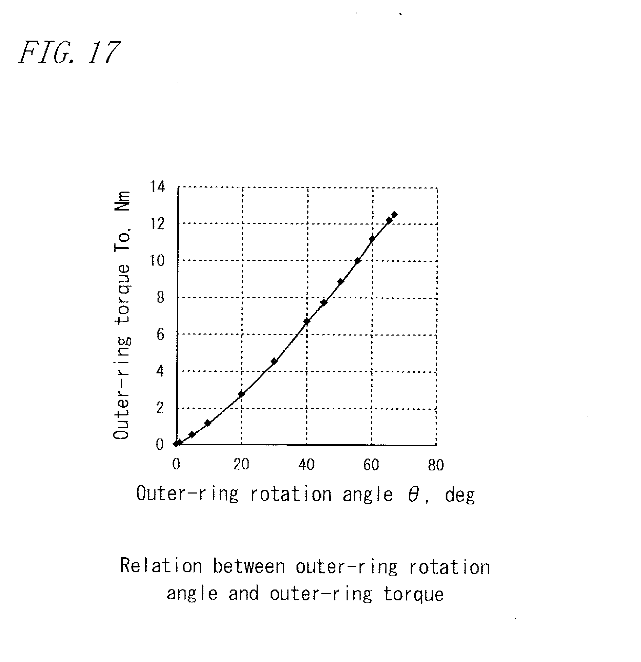

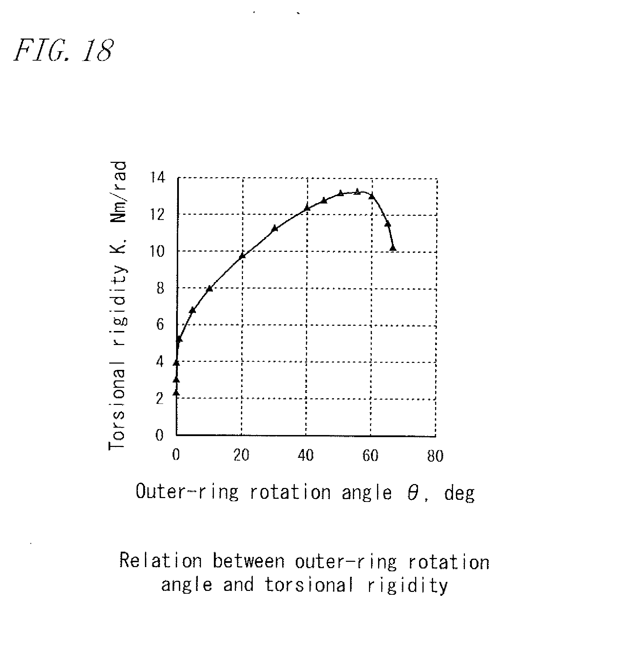

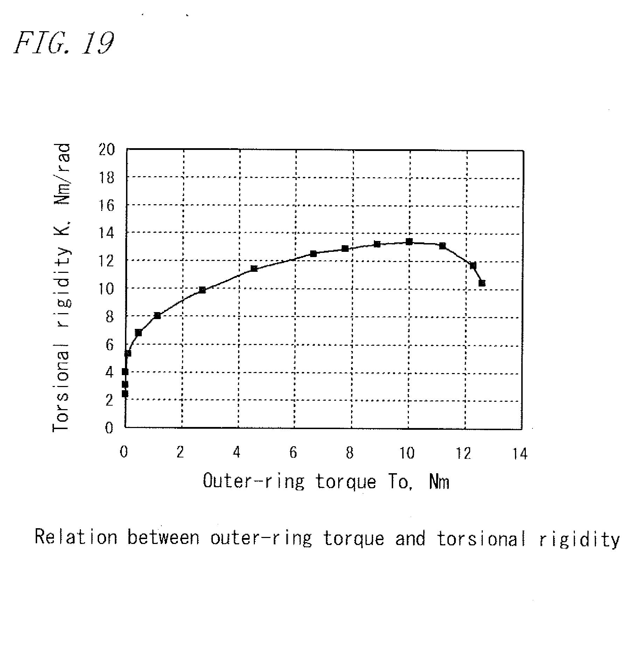

In the Test 6, the example was examined for a relation between the outer-ring rotation angle θ and the outer-ring torque To, which is shown in a graph of FIG. 17, The example was examined for a relation between the outer-ring rotation angle θ and the torsional rigidity K (Nm/rad), which is shown in a graph of FIG. 18. The example was further examined for a relation between the outer-ring torque To and the torsional rigidity K, which is shown in a graph of FIG. 19.
As indicated by the graphs of FIG. 17 and FIG. 18, the example subjected to a torque of about 12Nm, for example, exhibits a torsional rigidity K of about 12 Nm/rad. When subjected to the torque on the order of 12 Nm, this example exhibits much smaller torsional rigidity K than the example for Test 5. As shown in FIG. 18, the torsional rigidity K is not in monotonically increasing relation to the outer-ring rotation angle θ. As shown in FIG. 19, the torsional rigidity K is not in monotonically increasing relation to the outer-ring torque To.
These characteristics are also those which cannot be obtained from the conventional torsion coil spring or the like. The example is decreased in the torsional rigidity K when subjected to high load torque. When used in the above-described damper pulley or the like, the example is capable of more effectively reducing initial belt tension.

The rotation urging devices of the invention may be used in all sorts of applications that require the rotational urging function (torsion spring capability). For instance, the invention may be used in all the conventional applications which use the elastic member such as the torsion coil spring or rubber to impart the rotational urging function. Further, the invention may be more favorably used in an application which requires not only the torsion spring capability but also a bearing function such as a radial load bearing function. The invention may be favorably used in a conventional application, for example, wherein support bearings such as torsion coil springs are used in combination.

Examples of the application of the invention include auto tensioners, a variety of damper pulleys, clutches and the like. As for the damper pulley, the invention may be favorably used in crank pulleys, damper pulleys for alternator, pulleys for car air conditioners and the like which are capable of effectively accommodating the rotational variations of the engine thereby effectively reducing the initial belt tension.
The invention may also be used in a clutch disc of the clutch. The rotation urging device of the invention has the correlation between the angle of relative rotation between the inner and outer rings and the torque between the inner and outer rings. Hence, the rotation urging device of the invention may also be equipped with an angle sensor for measuring the rotation angle between the inner and outer rings, so as to be used as a torque sensor.
The rotation urging device of the invention may be used as a torque sensor for power steering device, for example. As a use in combination with a common bearing, the rotation urging device of the invention may be coaxially incorporated in the common bearing thereby being able to measure a torque produced between the inner and outer rings of the bearing.
Since the rotation urging device of the invention can be designed to function as the torque limiter, as described above, the device of the invention may be used in an application such as a drill head, a head of a machine tool or the like where the rotation urging device of the invention works effectively for obviating an excessive torque load thereby preventing breakage or permanent set in fatigue.

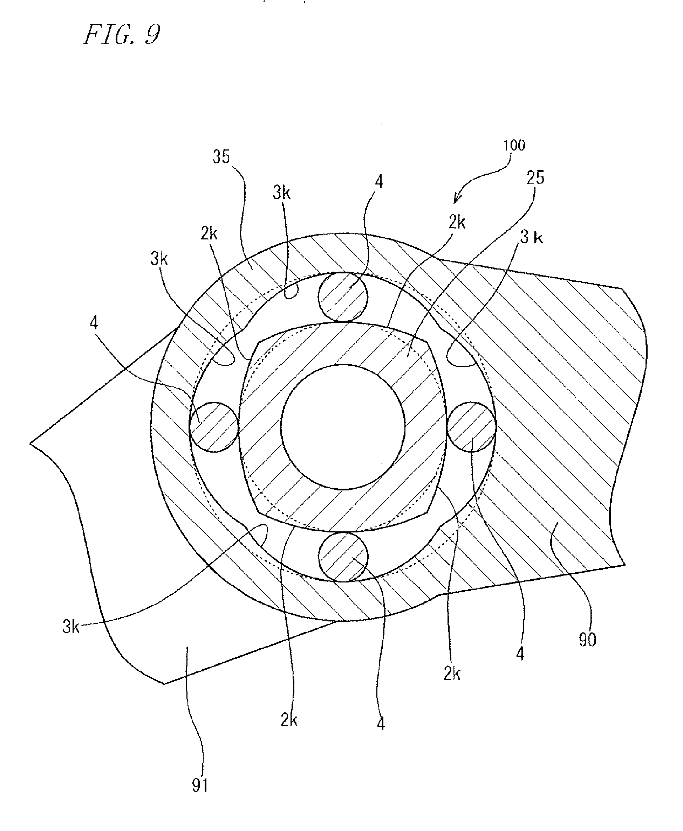

Further, the invention is also applicable to articulated mechanisms of industrial robots, artificial arms or foot/legs and the like. FIG. 9 is a sectional view showing an articulated mechanism 100 incorporating the four-roller rotation urging device shown in FIG. 5. The articulated mechanism 100 interconnects a first arm 90 unified with an outside member 35 and a second arm 91 unified with an inside member 25 in a manner to permit angle adjustment. Thus is provided the articulated mechanism 100 which is adapted to impart the torsion spring capability between the first arm 90 and the second arm 91 and to bear the load exerted between these arms 90, 91.
The rotation urging device, which exhibits the torsion spring capability only in one direction, as shown in FIG. 7, functions as the torsion spring in one direction and as the clutch in the other (opposite) direction. Therefore, this rotation urging device may be used in an application wherein such a function is useful.
As described above, the invention provides the rotation urging device featuring excellent characteristics as the rotation urging member, the device designed based on a technical concept entirely different from the prior-art concept. The inventive concept is that the deformed raceway surfaces are utilized for imparting the torsion spring capability between the inside and outside members.

## Claims

1. A rotation urging device comprising:
- an inside member including an inner raceway surface on an outer periphery thereof;
- an outside member including an outer raceway surface on an inner periphery thereof and disposed in relatively rotatable relation to the inside member; and
- a rolling element rollably interposed between the inner raceway surface and the outer raceway surface,
wherein at least one of the inner raceway surface and the outer raceway surface is at least partially formed with a deformed raceway surface which, in conjunction with the relative rotation of the inside member and the outside member, progressively decreases a clamping gap for the rolling element as allowing the rolling movement of the rolling element thereby imparting a rotational urging force between the inside member and the outside member in a direction to eliminate a phase difference between the inside member and the outside member, the phase difference caused by the relative rotation.

2. The rotation urging device according to Claim 1,
wherein the deformed raceway surface formed on the inner raceway surface is a convex curve.

3. The rotation urging device according to Claim 1,
wherein the deformed raceway surface formed on the outer raceway surface is a concave curve.

4. The rotation urging device according to Claim 2 or 3,
wherein the deformed raceway surface defines a curved surface having a curvature center deviated from a rotation axis of the inside and outside members.

5. The rotation urging device according to Claim 1,
which comprises the inside raceway surface and/or the outside raceway surface constituted by a plurality of deformed raceway surfaces continuously formed and circumferentially arranged with equal spacing, and the same number of rolling elements as the deformed raceway surfaces arranged with equal spacing, and wherein the clamping gaps for all the rolling elements are uniformly varied in conjunction with the relative rotation of the inside and outside members.

6. The rotation urging device according to Claim 1,
wherein the deformed raceway surface is formed in a manner to permit the inside and outside members to make an endless relative rotation at least in one direction when a torque of above a certain value is applied between the inside and outside members.
